# EUROPEAN PATENT SPECIFICATION

(11) **EP 3 352 023 B1**
(45) Date of publication and mention of the grant of the patent: **23.03.2022**
(21) Application number: 17852329.6
(22) Date of filing: 14.09.2017
(51) Int. Cl.: G03G 15/00, G03G 21/18, B41J 2/175, B41J 29/38, G06F 11/14, G03G 15/08

(54) **STORAGE MEDIUM, DATA PROCESSING METHOD AND CARTRIDGE CHIP USING THIS METHOD**
SPEICHERMEDIUM, DATENVERARBEITUNGSVERFAHREN UND KASSETTENCHIP MIT DIESEM VERFAHREN
SUPPORT DE STOCKAGE, PROCÉDÉ DE TRAITEMENT DE DONNÉES ET PUCE DE CARTOUCHE METTANT EN OEUVRE CE PROCÉDÉ

(30) Priority: 23.09.2016 CN 201610849245
(43) Date of publication of application: 25.07.2018
(73) Proprietor: Apex Microelectronics Co., Ltd, 519000 Zhuhai, Guangdong (CN)
(72) Inventor: LIU, Weichen, Zhuhai Guangdong (CN)
(74) Representative: Sun, Yiming
(86) International application number: PCT/CN2017/101715
(87) International publication number: WO 2018/054261

(56) References cited:
- EP-A1- 2 482 182
- EP-A2- 1 080 912
- EP-A2- 1 270 239
- WO-A1-2014/086137
- CN-A- 101 734 018
- CN-A- 102 768 484
- CN-A- 102 768 484
- CN-A- 103 009 818
- CN-A- 103 064 274
- US-A1- 2014 023 382

## Description

### Cross-reference to Related Applications

This application claims priority to Chinese Patent Application No. 201610849245.0, filed with the Chinese Patent Office on September 23, 2016 and entitled "DATA PROCESSING METHOD AND CARTRIDGE CHIP USING SAME".

### Technical Field

The present invention relates to the field of print imaging, and in particular, to a storage medium, a data processing method and a cartridge chip using same.

### Related Art

In a print imaging device such as an ink-jet printer or a laser printer, a recording material (for example, ink or toner) is provided by using a consumable cartridge. The recording material is accommodated in the consumable cartridge. When the recording material is used up, a user only needs to replace the consumable cartridge to continue to use the printer. To make it convenient to manage the consumable cartridge, a cartridge chip is disposed in the consumable cartridge. The cartridge chip stores information about the consumable cartridge, such as the manufacturer, the type of the recording material (toner or ink), color, capacity, or usage status. Therefore, when the user installs the consumable cartridge to the print imaging device, the information stored in the cartridge chip can be provided to the print imaging device, and the print imaging device can learn the basic information about the consumable cartridge. In addition, in the process of using the consumable cartridge, updated information such as usage status information is written to the cartridge chip. An explample is descrived given for instance in CN 102 768 484.

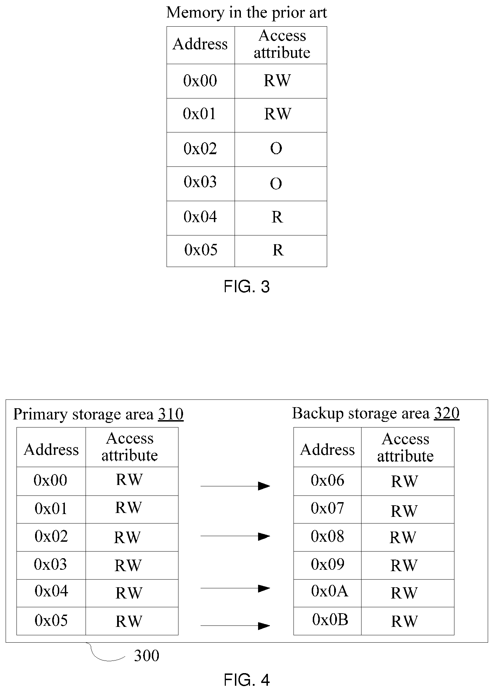

To prevent information in a cartridge chip from being improperly modified, memories in some cartridge chips are divided into several areas. A memory in the prior art shown in FIG. 3 includes six addresses and is divided into three areas: a read-only storage area (R), a read/write (RW) storage area (RW), and a write once storage area (WO). The read-only storage area stores information expected not to be rewritten, such as information about the manufacturer, to ensure uniqueness of the source of a cartridge chip.

However, because of the restrictions on accessing the cartridge chip, operations performed by the print imaging device on the cartridge chip cannot be relatively completely recorded. In some cases, an error occurs in the print imaging device. If the cartridge chip can record the operations of the print imaging device without access restrictions, auxiliary information can be provided during subsequent maintenance. The present invention researches on how to unrestrictedly record operations performed by a print imaging device on a cartridge chip on the premise of maintaining the uniqueness of information in the cartridge chip.

### SUMMARY

The present invention provides a storage medium, a data processing method and a cartridge chip using same, so as to resolve the foregoing problems in the prior art.

One aspect of the present invention provides a data processing method for a cartridge chip, where the cartridge chip includes a primary storage area and a backup storage area, and the data processing method includes:
determining whether a received instruction is a read instruction or a write instruction; and
if the received instruction is a write instruction, writing, according to an address included in the write instruction, data carried in the write instruction to a location to which the address points in the primary storage area, and determining, according to a preset rule, whether data in the backup storage area needs to be updated.

Another aspect of the present invention provides a cartridge chip, where the cartridge chip includes: an interface unit, a storage unit, and a control unit, where the storage unit includes a primary storage area and a backup storage area;
the interface unit is configured to receive an instruction sent by a print imaging device; and
the control unit is configured to: determine whether the received instruction is a read instruction or a write instruction; and
if the received instruction is a write instruction, write, according to an address included in the write instruction, data carried in the write instruction to a location to which the address points in the primary storage area, and determine, according to a preset rule, whether data in the backup storage area needs to be updated.

The present invention also provides a cartridge chip, where the cartridge chip includes a processor, and the processor is configured to execute program code, to implement the foregoing data processing method for a cartridge chip.

The present invention also provides a storage medium, where the storage medium stores program code, and the program code is used for implementing the foregoing data processing method for a cartridge chip.

Moreover the present invention provides a cartridge chip for a consumable cartridge, including:
a storage unit, including a primary storage area and a backup storage area, where the primary storage area stores data related to the consumable cartridge;
addresses in the backup storage area are in a one-to-one correspondence with addresses in the primary storage area, and the backup storage area is configured to store data that corresponds to the addresses in the primary storage area, where the data includes update configuration data, where
the update configuration data is used for instructing, when a write instruction and/or a read instruction is received, how to respond to the write instruction and/or the read instruction according to a preset rule.

The present invention provides a cartridge chip for a consumable cartridge, including:
a storage unit, including a primary storage area, a backup storage area, and a response storage area, where
the primary storage area stores data related to the consumable cartridge;
the response storage area stores response type information that is in a one-to-one correspondence with addresses in the primary storage area; and
the response type information includes at least one of the following: response type information when both a write instruction and a read instruction point to the primary storage area, response type information when a write operation is performed on the backup storage area after being performed on the primary storage area for the first time, or response type information when an error message is replied during writing.

According to the storage medium, the data processing method and the cartridge chip using same provided in the present invention, each piece of written information can be recorded in the primary storage area in time by using the data processing method and the cartridge chip using same provided in the embodiments of the present invention. To ensure the uniqueness of information in the cartridge chip, information in the backup storage area is updated only when conforming to the preset rule. In this way, operations performed by the print imaging device on the cartridge chip can be unrestrictedly recorded, and the uniqueness of the information in the cartridge chip can be ensured.

### BRIEF DESCRIPTION OF THE DRAWINGS

FIG. 1 is a schematic structural diagram of a cartridge chip according to an embodiment of the present invention;
FIG. 2 is a flowchart of a data processing method for a cartridge chip according to an embodiment of the present invention;
FIG. 3 is a schematic diagram of a data structure of a memory in the prior art;
FIG. 4 is a schematic diagram of a data structure of a storage unit according to an embodiment of the present invention;
FIG. 5 is a schematic diagram of a data structure of another storage unit according to an embodiment of the present invention;
FIG. 6 is a flowchart of another data processing method for a cartridge chip according to an embodiment of the present invention;
FIG. 7 is a schematic diagram of a data structure of another storage unit according to an embodiment of the present invention;
FIG. 8 is a flowchart of another data processing method for a cartridge chip according to an embodiment of the present invention; and
FIG. 9 is a schematic diagram of a data structure of another storage unit according to an embodiment of the present invention.

### DETAILED DESCRIPTION

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention as defined in the appended claims.

In the present invention, the terms such as "mounted", "connected", and "fixed" should be broadly understood. For example, "connected" may be fixedly connected, detachably connected, or integrally connected. A person of ordinary skill in the art may understand specific meanings of the terms in the present invention according to specific situations. It should be noted that, in the description of the present invention, the terms "first" and "second" are merely used for conveniently describing different components, and should not be construed as indicating or implying a sequential relationship or relative importance, or implicitly indicating the quantity of indicated technical features. Therefore, the quantity of features defined with "first" and "second" may be explicitly or implicitly at least one.

Unless otherwise defined, all technical and scientific terms used in the specification have the same meaning as commonly understood by a person skilled in the technical field of the present invention. The terms used in the specification of the present invention are merely for describing the specific embodiments, and are not intended to limit the present invention.

The following describes in detail some implementations of the present invention with reference to the accompanying drawings. The embodiments and the features thereof may be combined together provided that no conflict occurs among the embodiments.

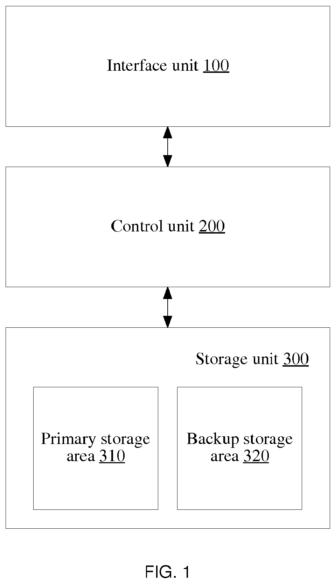

A structure of a cartridge chip detachably mounted to a consumable cartridge and provided in an embodiment of the present invention is shown in FIG. 1. The cartridge chip includes: an interface unit 100, a control unit 200, and a storage unit 300. The interface unit 100 is connected to the control unit 200, and the control unit 200 is connected to the storage unit 300. The storage unit includes a primary storage area 310 and a backup storage area 320.

The interface unit 100 is electrically connected to an imaging device, to receive a read instruction and a write instruction sent by the imaging device. The read instruction or the write instruction includes address information of a specific location to which the instruction points. The interface unit may be connected to the imaging device in a wired or wireless manner.

The storage unit 300 generally stores information about an imaging box, such as ink cartridge identification information, the manufacturer, a production date, an ink usage amount, and a remaining ink amount. The storage unit uses a common nonvolatile memory such as an EPROM, an EEPROM, a FLASH, a ferroelectric memory, or a phase change memory; or may adopt a scheme of a volatile memory plus a power supply, for example, SRAM + battery or capacitor, or DRAM + battery or capacitor.

The control unit 200 is configured to process the read instruction and the write instruction received by the interface unit. Specifically, the control unit is configured to: determine whether a received instruction is a read instruction or a write instruction, and if the received instruction is a write instruction, write, according to an address included in the write instruction, data carried in the write instruction to a location to which the address points in the primary storage area; or

if the received instruction is a read instruction, determine whether there is backup data that is in the backup storage area and that corresponds to an address included in the read instruction; and if there is backup data, read the data from the backup storage area; or if there is no backup data, read data from the primary storage area according to the address in the read instruction.

When the received instruction is a write instruction, after a write operation is completed, the control unit determines, according to a preset rule, whether information in the backup storage area needs to be updated.

It should be noted that the preset rule may be a preset update control list. The update control list may store specific update information. Alternatively, the preset rule may be a preset update determining rule. The update determining rule may determine a specific response update manner based on a storage data feature or a storage address feature of the primary storage area and/or the backup storage area in the storage unit and/or a type of the received instruction (a read instruction or a write instruction). Specifically, an implementable manner is: determining the specific response update manner based on the storage data feature of the primary storage area and/or the backup storage area. Another implementable manner is: determining the specific response update manner based on the storage address feature of the primary storage area and/or the backup storage area. Still another implementable manner is: how to determine, after a read instruction or a write instruction is received, a response update manner that corresponds to the type of the instruction. Yet another implementable manner is: how to determine, based on the storage data feature of the primary storage area and/or the backup storage area when a read instruction or a write instruction is received, a response update manner that corresponds to the storage data feature of the primary storage area and the backup storage area and the type of the instruction. Still yet another implementable manner is: how to determine, based on the storage address feature of the primary storage area and/or the backup storage area when a read instruction or a write instruction is received, a response update manner that corresponds to the storage address feature of the primary storage area and the backup storage area and the type of the instruction.

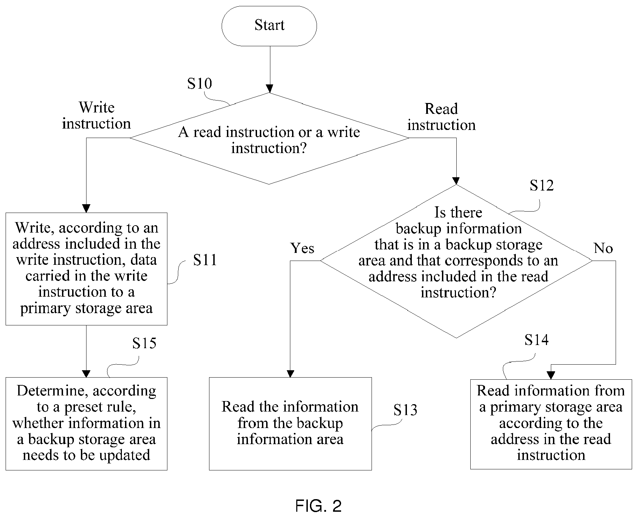

FIG. 2 is a flowchart showing that the foregoing control unit performs a data processing method.

Step S10: Determine whether a received instruction is a read instruction or a write instruction.

An implementation of determining whether the instruction is a read instruction or a write instruction may be as follows: The instruction is compared and analyzed with a preset standard read instruction. If the instruction matches the standard read instruction, it is determined that the instruction is a read instruction; or if the instruction does not match the standard read instruction, the instruction is compared and analyzed with a preset standard write instruction. If the instruction matches the standard write instruction, it is determined that the instruction is a write instruction. Alternatively, identification information is extracted from the instruction, and whether the instruction is a read instruction or a write instruction is determined according to the identification information. Specifically, if the identification information matches read identification information preset in a read instruction, it is determined that the instruction is a read instruction. Similarly, if the identification information matches write identification information preset in a write instruction, it is determined that the instruction is a write instruction.

If it is determined that the instruction is a write instruction, in step S11, data carried in the write instruction is written, according to an address included in the write instruction, to a location to which the address points in the primary storage area; or

if the received instruction is a read instruction, in step S12, it is determined whether there is backup data that is in the backup storage area and that corresponds to an address included in the read instruction. If there is backup data, in step S13, the data is read from the backup storage area; or if there is no backup data, in step S14, data is read from the primary storage area according to the address in the read instruction.

In addition, when the received instruction is a write instruction, after a write operation is completed, in step S15, it is determined, according to a preset rule, whether information in the backup storage area needs to be updated.

In another option, whether data in the backup storage area needs to be updated may be determined according to a preset rule when a read instruction is received. When the read instruction is executed, the latest data should be read. Therefore, to determine, when a read instruction is received, whether data in the backup storage area needs to be updated, update of the data in the backup storage area needs to be completed before the read instruction is executed.

### Embodiment 1

In the prior art shown in FIG. 3, to prevent information in a memory from being improperly modified, the memory is divided into three areas: a read-only storage area (R), a read/write storage area (RW), and a write once storage area (WO). Different areas have different access attributes. The read-only storage area R allows only data in the area to be read. Data in the read/write storage area (RW) may be read or rewritten. The write once storage area (WO) allows data in the area to be rewritten for only once, but the number of reading times is not limited. To achieve the objective of the present invention, in this embodiment, a storage unit includes a primary storage area and a backup storage area. The size of the backup storage area is substantially the same as that of the primary storage area. To facilitate understanding of the form of the data structure of the storage unit in this embodiment, in correspondence with the prior art shown in FIG. 3, an exemplary description is shown in FIG. 4. A primary storage area 310 in a storage unit 300 includes addresses from 0x00 (hexadecimal notation, representing a hexadecimal digit "00") to 0×05. A backup storage area 320 includes addresses from 0×06 to 0×0B, immediately following the addresses in the primary storage area. Both the primary storage area and the backup storage area include six addresses. The total 12 addresses are in a one-to-one correspondence. Data of each address in the primary storage area has a corresponding address in the backup storage area to store a backup data. For example, an address that is in the backup storage area and that corresponds to the address 0x00 is 0×06, and an address that is in the backup storage area and that corresponds to the address 0×05 is 0×0B.

Both the primary storage area 310 and the backup storage area 320 are set to be freely accessible without any restriction, that is, both the primary storage area 310 and the backup storage area 320 are read/write storage areas (RW). In addition, the backup storage area is added in this embodiment, and the foregoing data processing method is used for processing a read instruction and a write instruction sent by the print imaging device, to maintain the uniqueness of information in a cartridge chip and prevent the information from being arbitrarily rewritten, so that a print imaging device can recognize the data in the cartridge chip.

Specifically, as described above, a control unit is configured to determine whether a received instruction is a read instruction or a write instruction. If the received instruction is a write instruction, data carried in the write instruction is written, according to an address included in the write instruction, to a location to which the address points in the primary storage area. In this embodiment, the backup storage area 320 is a newly added storage area, and an original range for addressing the cartridge chip by the print imaging device is 0x00 to 0×05. Therefore, when the range for addressing by the print imaging device is not changed, addresses included in the write instruction received by the control unit all point to the primary storage area, and the backup storage area is not addressed by the write instruction. In this case, data in the backup storage area cannot be directly rewritten according to the write instruction. Different from the prior art, each address in the primary storage area 210 can be arbitrarily accessed. For example, when the print imaging device goes wrong and sends a write instruction for rewriting two addresses 0×04 and 0×05, the cartridge chip in this embodiment can be rewritten, so that the abnormal operation of the print imaging device is recorded.

In another case, if determining that the received instruction is a read instruction, the control unit determines whether there is backup data that is in the backup storage area and that corresponds to an address included in the read instruction. If there is backup data, the data is read from the backup storage area; or if there is no backup data, data is read from the primary storage area according to the address in the read instruction. In this embodiment, because the addresses in the backup storage area 320 are in a one-to-one correspondence with addresses in the primary storage area 310, data of each address in the primary storage area 310 is backed up in the backup storage area 320. Therefore, when the control unit determines that the received instruction is a read instruction, data is read from the backup storage area and then returned to the print imaging device through an interface unit.

The primary storage area and the backup storage area are obtained through division, so that the read instruction and the write instruction correspond to different storage partitions. In this way, each piece of write instruction can be recorded and correct data can be returned to the print imaging device. Apparently, addresses 0x00 and 0×01 belong to the read/write storage area (RW). If the area has been rewritten by the print imaging device, when the two addresses are read, data of corresponding addresses 0×06 and 0×07 in the backup storage area should be synchronously updated to the latest data. Therefore, when the received instruction is a write instruction, after a write operation is completed, the control unit further needs to determine, according to a preset rule, whether data in the backup storage area needs to be updated.

Specifically, the preset rule may be in a form of an update control list stored at an address other than the addresses 0x00 to 0×0B in the storage unit. The update control list may be stored at another address in the primary storage area or the backup storage area, or may be stored in another storage area in the storage unit. For example, the update control list includes the following information:

**Table 1**

| Addresses in the write instruction | Update needing to be performed | Addresses in the write instruction | Update needing to be performed |
|---|---|---|---|
| 0x00 | Update 0×06 | 0×03 | Perform update when data of 0×09 is 0×AA |
| 0×01 | Update 0×07 | 0×04 | Do not update |
| 0×02 | Perform update when data of 0×08 is 0×AA | 0×05 | Do not update |

According to the foregoing update control list, after a write operation is completed, the control unit determines, according to the rule in the update control list, whether the data in the backup storage area needs to be updated. Table 1 stores update control list information indicating whether the data that is in the backup storage area and that respectively corresponds to the different addresses included in the write instruction needs to be updated and how the data may be updated. In Table 1, some addresses in the backup storage area are selectively updated according to the corresponding update manners and according to the addresses that are included in the write instruction and that are just processed.

For example, when the address included in the write instruction is 0×00, the control unit copies, to the address 0×06 according to the preset rule in the update control list, data of the address 0x00 to which the data has just been written, to complete update. After the update, the data of the address 0x00 in the primary storage area is the same as the data of the address 0×06 in the backup storage area, thereby achieving synchronous update.

During production, initial configuration may be performed on the data in the backup storage area. For example, the data of the addresses 0×06 and 0×07 and 0×0A and 0×0B may be configured to be the same as data of corresponding addresses in the primary storage area. The data of 0×08 and 0×09 are initially configured to be 0×AA (or other numerical values not very likely to appear). When the address included in the write instruction is 0×02, the control unit first determines data of the address 0×08 in the backup storage area according to the preset rule. Because the data of 0×08 is 0×AA, it indicates that the data of 0×08 in the backup storage area needs to be updated. Data of the address 0×02 to which the data has just been written is copied to the address 0×08, to complete update. After the update, the data of the address 0×02 in the primary storage area is the same as the data of the address 0×08 in the backup storage area, thereby achieving synchronous update. If next time the cartridge chip receives again a write instruction indicating that the address 0×02 needs to be rewritten, because the data of the address 0×08 in the backup storage area has already been updated and is no longer an update condition in the control list, rewriting of the address 0×02 this time and subsequently does not cause update at the address 0×08, thereby implementing the originally set access attribute of "write once".

When the address included in the write instruction is 0×04, the update control list restricts update performed by the control unit on the backup storage area. Therefore, when the address is read according to a read instruction, data has always been the data initially configured for the backup storage area during production, thereby implementing the originally set access attribute of "read only".

FIG. 3 only lists, by way of example, the memory that has three types of access attributes. If there is a partition that has another access attribute, the preset rule in this embodiment, that is, the update control list should be extended as follows:

**Table 2**

| An original access attribute of an address in a write instruction | Update needing to be performed | An original access attribute of an address in a write instruction | Update needing to be performed |
|---|---|---|---|
| Read/write (RW) | Update a corresponding address in the backup storage area | Increment write (IW) | Perform update when data of a corresponding address in the backup storage area is smaller than a numerical value in the primary storage area |
| Read only (R) | Do not update | One direction write (ODW) | Perform AND operation on data in the backup storage area and a numerical value in the primary storage area, and perform update if the data in the backup storage area is equal to the AND operation value; or do not perform update if the data in the backup storage area is not equal to the AND operation value, or the data in the primary storage area is equal to the data in the backup storage area |
| Write once (WO) | Perform update when a corresponding address in the backup storage area is of an initial value | | |

Table 2 stores update control list information indicating whether the data that is in the backup storage area and that respectively corresponds to the different addresses included in the write instruction needs to be updated and how the data may be updated. The increment write (IW) storage area allows only data greater than original data to be written. For example, if the original data is 0×01, only data greater than 0×01 can be written, and data, such as 0×00, that is smaller than the original data cannot be written. The one direction write (ODW) storage area allows only data to be rewritten unidirectionally, for example, data can be rewritten only from 0 to 1 but cannot be rewritten from 1 to 0. For example, data 0×10 can be rewritten to 0×11, but cannot be rewritten to 0×01 or 0×00. When the received instruction is a write instruction, after a write operation is completed, for the writing of the addresses that have the two types access attributes, the control unit further needs to determine, according to the preset rule in Table 2, whether data in the backup storage area needs to be updated.

When an original access attribute of the address included in the write instruction is increment write (IW), the control unit compares, according to the preset rule in the control list, data of the address in the primary storage area and to which the data has just been written with data of an address that is in the backup storage area and that corresponds to the address. If the data of the corresponding address in the backup storage area is smaller than the numerical value in the primary storage area, the data of the address in the primary storage area is copied to the corresponding address in the backup storage area, to complete update. On the contrary, if the data of the corresponding address in the backup storage area is greater than the numerical value in the primary storage area, update does not need to be performed. In this way, it is ensured that a larger value of the corresponding address in the backup storage area is always updated. In this way, when a read instruction is received, a larger value can be read, thereby conforming to the setting of the original access attribute.

The foregoing read instruction, unless otherwise specified, is an instruction sent by the print imaging device to the cartridge chip. Alternatively, the cartridge chip may define a read instruction and a write instruction of another device. For example, during production of the cartridge chip, a production device may perform a read/write operation on the cartridge chip by using an instruction the same as that used by the print imaging device, or by using a self-defined instruction. In this embodiment, instructions are defined as a device read instruction and a device write instruction. Data of any address in the primary storage area and the backup storage area may be unrestrictedly read or rewritten by using the device read instruction and the device write instruction. The control unit does not control read/write content of the device read instruction and the device write instruction. For example, when the device read instruction instructs to read the address 0×01, data may be directly read from the address, rather than from the corresponding address 0×07 in the backup storage area. This is helpful for production, testing, and debugging.

In the foregoing description, a trigger condition of determining whether data in the backup storage area needs to be updated is a write instruction. In another option, whether data in the backup storage area needs to be updated may be determined according to a preset rule when a read instruction is received.

Specifically, when the received instruction is a read instruction, before executing the read instruction, the control unit determines, according to a preset rule, whether data in the backup storage area needs to be updated. If the data needs to be updated, the read instruction is executed to read the data from the backup storage area after the data in the backup storage area is updated; or data is read from the primary storage area before the data in the backup storage area is updated. If the data does not need to be updated, the read instruction is executed to read the data from the backup storage area after the determining.

Descriptions of determining whether update needs to be performed and an update method are similar to the description of using the write instruction as a trigger condition. Because an instruction received first after the cartridge chip is mounted to the print imaging device is generally a read instruction, and update needs to be performed after a write instruction is received, by using a read instruction as a trigger condition of update, the first received read instruction may not be considered. Alternatively, a first received write instruction is used as a trigger condition of determining update of a read instruction.

### Embodiment 2

To read suitable data according to a received read instruction, in Embodiment 1, a control list is stored in a storage unit to be used as a basis for determining whether information in a backup storage area needs to be updated. This embodiment provides another determining basis, and no control list shown in Embodiment 1 needs to be stored in a storage unit.

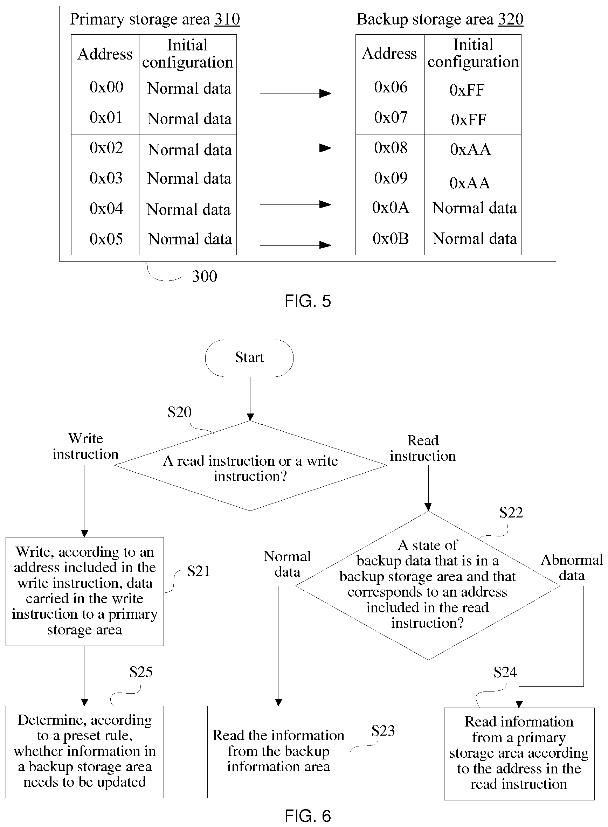

As shown in FIG. 5, this embodiment provides a schematic diagram of a data structure of another storage unit. The storage unit 300 also includes a primary storage area 310 and a backup storage area 320. The primary storage area 310 is of a size substantially the same as that of the backup storage area 320, and addresses in the two storage areas are in a one-to-one correspondence. Both an access attribute of the primary storage area 310 and an access attribute of the backup storage area 320 may be set to be freely read/write (RW), and there is no access restriction. Different from FIG. 4, data stored in the backup storage area 320 is initially configured during production. 0×FF is initially configured and stored at addresses 0×06 and 0×07 that correspond to a storage area having an original access attribute RW, 0×AA is initially configured and stored at addresses 0×08 and 0×09 that correspond to a storage area having an original access attribute WO, and normal data is initially configured and stored at addresses 0×0A and 0×0B that correspond to a storage area having an original access attribute R. In this embodiment, data such as 0×AA and 0×FF that rarely appear are defined as invalid data (including first invalid data 0×AA and second invalid data 0×FF), and data other than the data is normal data. Generally, the normal data is data considered by a print imaging device as conforming to a requirement when the data is read by the print imaging device for the first time. Therefore, initially configured data in the primary storage area is normal data, and initially configured and stored data at the addresses 0×0A and 0×0B is the same as that at addresses 0×04 and 0×05, and is normal data.

In this embodiment, a control unit processes a read instruction and a write instruction in the following specific manner:
The control unit is configured to: determine whether a received instruction is a read instruction or a write instruction; and if the received instruction is a write instruction, write, according to an address included in the write instruction, data carried in the write instruction to a location to which the address points in the primary storage area; or

if the received instruction is a read instruction, determine a state of backup data that is in the backup storage area and that corresponds to an address included in the read instruction; and if the backup data is normal data, read the data from a corresponding address in the backup storage area; or if the backup data is abnormal data, read data from the primary storage area according to the address in the read instruction. For example, in this embodiment, when the address included in the read instruction is 0×00, data of the address 0×06 that is in the backup storage area and that corresponds to 0x00 is 0×FF, belonging to the invalid data defined above, that is, the data is abnormal data. In this case, the control unit reads, according to the address 0x00 in the read instruction, data of the address 0x00 in the primary storage area.

When determining the state of the backup data that is in the backup storage area and that corresponds to the address included in the read instruction, it is not necessary to specially determine which address the corresponding address is. An offset may be added to the address in the read instruction, to determine a state of data at the address after the offset. For example, in this embodiment, a difference between each address in the backup storage area and a corresponding address in the primary storage area is 6. Therefore, for example, when the read instruction instructs to read data of the address 0x00, the control unit directly adds an offset 6 to the address 0x00, to obtain the address 0×06, and directly determines a state of the data of the address 0×06. An address corresponding to an address included in the read instruction may also be determined by adding an offset to the original address.

When the control unit determines that the received instruction is a write instruction, after a write operation is completed, the control unit determines, according to a preset rule, whether information in the backup storage area needs to be updated. In this embodiment, the preset rule is:
determining data of each address in the backup storage area, where if the data is normal data, the data does not need to be updated; and if the data is preset first invalid data, where the first invalid data may be 0×AA, the data needs to be updated, and data of a corresponding address in the primary storage area is copied to the backup storage area, to overwrite the first invalid data, that is, to overwrite the 0×AA data; or if the data is preset second invalid data, where the second invalid data may be 0×FF, the data does not need to be processed.

Therefore, assuming that the print imaging device rewrites all addresses in the primary storage area, data of the addresses 0×06 and 0×07 is still the 0×FF data; data of the addresses 0x8 and 0×09 changes to normal data after a first update, so that no more update need to be performed; data of the addresses 0×0A and 0×0B is still the original normal data, the print imaging device can read, when reading the addresses 0x00 and 0×01 according to a read instruction, data that is normally rewritten all the time, and can read data after a first update when reading the addresses 0×02 and 0×03. Data of the corresponding addresses 0×0A and 0×0B in the backup storage area is not changed when the print imaging device reads the addresses 0×04 and 0×05. It can be learned that by using the foregoing initial configuration of the storage unit and the processing on the read instruction and the write instruction, the cartridge chip can not only provide correct data, but also record every write operation previously performed by the print imaging device on each address in the cartridge chip.

FIG. 6 is a flowchart showing that the foregoing control unit performs a data processing method.

Step S20: Determine whether a received instruction is a read instruction or a write instruction. If it is determined that the instruction is a write instruction, in step S21, data carried in the write instruction is written, according to an address included in the write instruction, to a location to which the address points in the primary storage area; or
if the received instruction is a read instruction, in step S22, a state of backup data that is in the backup storage area and that corresponds to an address included in the read instruction is determined. Data stored in the backup storage area may include update configuration data. The update configuration data is used for instructing, when a write instruction and/or a read instruction is received, how to respond to the write instruction and/or the read instruction according to a preset rule. In addition, the data stored in the backup storage area may further include normal data that is the same as data of the addresses in the primary storage area. The update configuration data may include invalid data.

Specifically, when determining the state of the backup data that is in the backup storage area and that corresponds to the address included in the read instruction, if the backup data is normal data, in step S23, the data is read from the backup storage area; or if the backup data is abnormal data, in step S24, data is read from the primary storage area according to the address in the read instruction.

In addition, when the received instruction is a write instruction, after a write operation is completed, in step S25, it is determined, according to a preset rule, whether information in the backup storage area needs to be updated. In this embodiment, the preset rule is:
determining data of each address in the backup storage area, where if the data is normal data, the data does not need to be updated; and if the data is preset first invalid data, where the first invalid data may be 0×AA, the data needs to be updated, and data of a corresponding address in the primary storage area is copied to the backup storage area, to overwrite the first invalid data, that is, to overwrite the 0×AA data; or if the data is preset second invalid data, where the second invalid data may be 0×FF, the data does not need to be processed.

In the foregoing description, a trigger condition of determining whether data in the backup storage area needs to be updated is a write instruction. In another option, whether data in the backup storage area needs to be updated may be determined according to a preset rule when a read instruction is received.

Specifically, when the received instruction is a read instruction, before executing the read instruction, the control unit determines, according to a preset rule, whether data in the backup storage area needs to be updated. If the data needs to be updated, the read instruction is executed to read the data from the backup storage area after the data in the backup storage area is updated; or data is read from the primary storage area before the data in the backup storage area is updated. If the data does not need to be updated, the read instruction is executed to read the data from the backup storage area after the determining.

Descriptions of determining whether update needs to be performed and an update method are similar to the description of using the write instruction as a trigger condition. Because an instruction received first after the cartridge chip is mounted to the print imaging device is generally a read instruction, and update needs to be performed after a write instruction is received, by using a read instruction as a trigger condition of update, the first received read instruction may not be considered. Alternatively, a first received write instruction is used as a trigger condition of determining update of a read instruction.

### Embodiment 3

This embodiment is a variation embodiment of Embodiment 2. In Embodiment 2, whether information in a backup storage area needs to be updated is determined according to a preset rule, that is, according to the information in the backup storage area. In this embodiment, response type information of each address may be stored in a storage unit. In this way, a preset rule may be determined by determining the response type information, thereby knowing how to correctly respond to a received read instruction and write instruction.

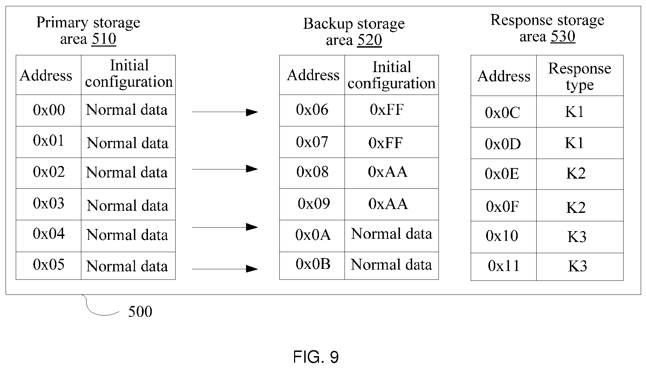

Specifically, as shown in FIG. 9, this embodiment provides a schematic diagram of a data structure of another storage unit. The storage unit 500 includes a primary storage area 510 and a backup storage area 520. In addition, a response storage area 530 is further set. The response storage area records how each address in the primary storage area should respond. To facilitate description, in FIG. 9, the response storage area is of a size the same as that of the primary storage area, and addresses in the two storage areas are in a one-to-one correspondence. That is, in the response storage area, response type information of a corresponding address in the primary storage area is recorded by using one byte. In this embodiment, the primary storage area includes data that has three types of access attributes. Correspondingly, in the response storage area, the three types of data are respectively recorded as a preset first response type K1, a preset second response type K2, and a preset third response type K3. To save storage space, a response type of each address in the primary storage area may be recorded by using two bits, instead of using one byte as shown in FIG. 9. An access attribute of the primary storage area 510, an access attribute of the backup storage area 520, and an access attribute of the response storage area 530 may all be set to free read/write (RW), and there is no access restriction.

To implement correct processing on a read instruction and a write instruction as Embodiment 3 does, in this embodiment, the following stipulations are performed on the response type information:
Response type K1: Both a read instruction and a write instruction point to the primary storage area.
Response type K2: After a write instruction is executed for the first time, data of a corresponding address in the primary storage area is copied to the backup storage area, and a read instruction points to the backup storage area.
Response type K3: A read instruction points to the backup storage area, and an error signal is replied when a write instruction is received.

Therefore, in this embodiment, a control unit processes a read instruction and a write instruction in the following specific manner:
The control unit is configured to: determine whether a received instruction is a read instruction or a write instruction; and if the received instruction is a write instruction, write, according to an address included in the write instruction, data carried in the write instruction to a location to which the address points in the primary storage area, and determine a response type that corresponds to the address, to perform further processing according to the response type information. For example, in this embodiment, when the address included in the write instruction is 0×04, a corresponding response type in the response storage area is K3, so that the control unit writes, according to the address 0×04 in the write instruction, data to the address 0×04 in the primary storage area and generates an error signal to reply to the print imaging device.

If the received instruction is a read instruction, the control unit determines a response type that is in the response storage area and that corresponds to an address in the read instruction. If the response type is K2 or K3, data of a corresponding address in the backup storage area is read; or if the response type is K1, data is read from the primary storage area according to the address in the read instruction. For example, in this embodiment, when the address included in the read instruction is 0×00, a corresponding response type in the response storage area is K1, so that the control unit reads data of the address 0x00 in the primary storage area according to the address 0x00 in the read instruction.

Response types of data that has other access attributes, for example, data in an increment write (IW) storage area and a one direction write (ODW) storage area described in Embodiment 1, may be respectively set to K4 and K5. K4 and K5 are specifically defined as follows:
Response type K4: When the received instruction is a read instruction, data of an address in the primary storage area is compared with data of a corresponding address in the backup storage area, and the greater data is replied. When the received instruction is a write instruction, the backup storage area is pointed to, and data to be written is compared with data of a corresponding address in the primary storage area. If the data to be written to the backup storage area is smaller, an error signal is replied; or if the data to be written to the backup storage area is greater, the data is synchronous written to the corresponding address in the primary storage area.

Response type K5: Both a read instruction and a write instruction point to the primary storage area. After the write instruction is executed, data that is written to is logically left shifted by 1 bit. When the read instruction is executed, data that is read is logically right shifted by 1 bit, and then a reply is given.

In addition, a cartridge chip needs to perform preset processing when some addresses are accessed. Corresponding response types also need to be set for these addresses. For example, when an address is accessed, the cartridge chip needs to reply with exclusive OR data. In this case, a response type K6 is set for an address that is in the response storage area and that corresponds to the address. A control unit in the cartridge chip performs an exclusive OR operation on data in a storage unit, to obtain exclusive OR data, and then sends the exclusive OR data to the print imaging device. In another example, when an address is accessed, to reply with data generated by using a preset algorithm, the cartridge chip needs to set a corresponding response type for the address, such as a response type K7. The control unit generates data of the address according to the response type and by using the preset algorithm. Because an address that is in the backup storage area and that corresponds to an address storing the response type information K7 in the response storage area does not need to store valid normal data, invalid data such as the foregoing 0×FF can be stored.

In another feasible option, after the response storage area is added, in this embodiment, information such as the 0×FF data and the 0×AA data in the backup storage area 520 in FIG. 9 for determining whether information in the backup storage area needs to be updated and how to be updated may not be stored in the backup storage area. A write instruction and a read instruction are controlled to be responded to only according to the response type information stored in the response storage area.

### Embodiment 4

In the foregoing embodiments, a space having a substantially same size as that of a space of a primary storage area needs to be configured for a backup storage area, so that compared with a cartridge chip in the prior art, a memory having a capacity of at least two times that of a memory in the cartridge chip in the prior art needs to be provided. This is not helpful for reducing costs of a cartridge chip.

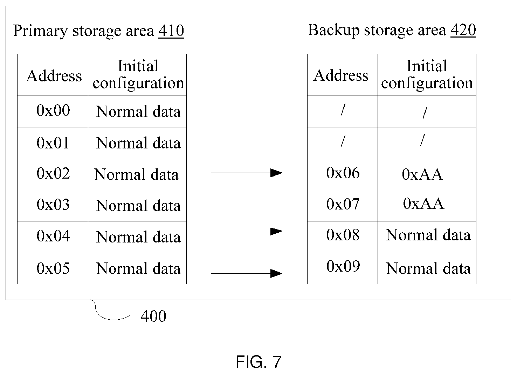

This embodiment provides another cartridge chip. In a storage unit of the cartridge chip, an address that is in a backup storage area and that corresponds to a primary storage area is optionally configured, thereby reducing a space of the backup storage area. As shown in FIG. 7, in the storage unit 400, a space of the primary storage area 410 occupies six bytes, and addresses are 0×00 to 0×05. The space of the backup storage area 420 occupies four bytes, and addresses are 0×06 to 0×09. 0×AA is initially configured and stored at the addresses 0×06 and 0×07 that correspond to a storage area having an original access attribute WO, normal data is initially configured and stored at the addresses 0×08 and 0×09 that correspond to a storage area having an original access attribute R, and no backup data is set in the backup storage area 420 for a storage area 0×00-0×01 having an original access attribute RW.

Backup data corresponding to data in the storage area having an original access attribute RW may be selected not to be set. According to an actual requirement, backup data corresponding to data in a storage area having another access attribute may alternatively be selected not to be set. For example, when the primary storage area further stores digital signature information, the digital signature information usually occupies a large part of the data space, and the digital signature is generally used for authentication instead of recording a state of the cartridge chip. Therefore, the digital signature information may be selected not to be backed up. In this way, the storage space in the backup storage area is saved.

In this embodiment, a control unit is configured to process a read instruction and a write instruction received by an interface unit. Specifically, the control unit is configured to: determine whether the received instruction is a read instruction or a write instruction, and if the received instruction is a write instruction, write, according to an address included in the write instruction, data carried in the write instruction to a location to which the address points in the primary storage area; or

if the received instruction is a read instruction, determine whether there is backup data that is in the backup storage area and that corresponds to an address included in the read instruction; and if there is backup data, read the data from the backup storage area; or if there is no backup data, read data from the primary storage area according to the address in the read instruction.

In this embodiment, because the addresses in the backup storage area 420 are not in a one-to-one correspondence with addresses in the primary storage area 410, and the backup storage area 420 only backs up data of the addresses 0×02 to 0×05 in the primary storage area 410. Therefore, when determining that the received instruction is a read instruction, if the addresses are 0×02 to 0×05, the control unit reads data from the backup storage area, and then returns the data to a print imaging device through the interface unit; or if the addresses are 0×00 and 0×01, because there is no backup data in the backup storage area, the control unit reads data of the addresses in the primary storage area according to the addresses in the read instruction.

It should be noted that, in this embodiment, because 0×AA is initially configured and stored at the addresses 0×06 and 0×07 that correspond to a storage area having an original access attribute WO, if the addresses 0×06 and 0×07 in the backup storage area are directly read when the addresses to be read are 0×02 and 0×03, invalid data such as 0×AA may be sent out. Therefore, in the foregoing step, when determining whether there is backup data that is in the backup storage area and that corresponds to the address included in the read instruction, a state of the backup data needs to be further determined. If the state of the backup data is invalid data, the control unit reads data of the address in the primary storage area according to the address in the read instruction, and reads data from the backup storage area only when the state of the backup data is normal data. Because 0×AA is initially configured and stored at the addresses 0×06 and 0×07 that correspond to the storage area having an original access attribute WO, the data of the addresses needs to be updated once before becoming normal data. The following describes how to update the data in the backup storage area.

When the received instruction is a write instruction, after a write operation is completed, the control unit determines, according to a preset rule, whether data in the backup storage area needs to be updated.

In this embodiment, the preset rule is: determining data of each address in the backup storage area. If the data is normal data, the data does not need to be updated; or if the data is preset first invalid data, where the first invalid data may be 0×AA, the data needs to be updated, and data of a corresponding address in the primary storage area is copied to the backup storage area, to overwrite the first invalid data, that is, to overwrite the 0×AA data.

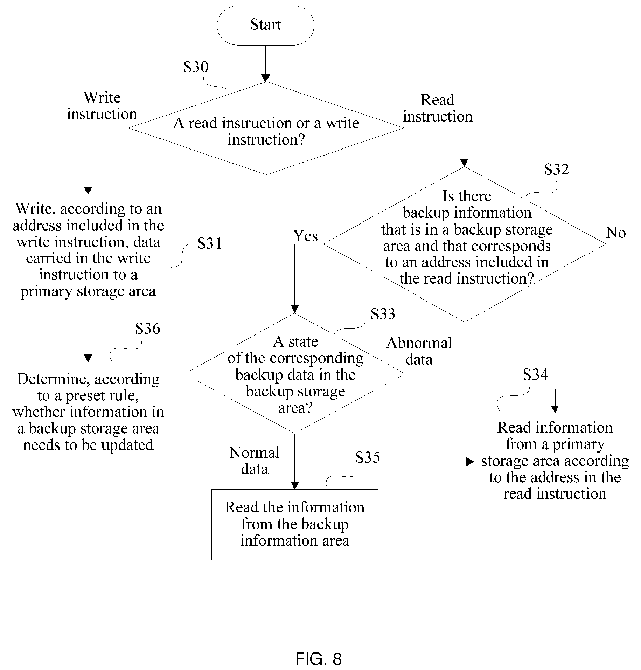

FIG. 8 is a flowchart showing that the foregoing control unit performs a data processing method.

Step S30: Determine whether a received instruction is a read instruction or a write instruction. If it is determined that the instruction is a write instruction, in step S31, data carried in the write instruction is written, according to an address included in the write instruction, to a location to which the address points in the primary storage area; or
if the received instruction is a read instruction, in step S32, it is determined whether there is backup data that is in the backup storage area and that corresponds to an address included in the read instruction. If there is backup data, in step S33, a state of the corresponding backup data in the backup storage area is determined. If the backup data is normal data, in step S35, the data is read from the backup storage area; or if the backup data is abnormal data, or it is determined in step S32 that there is no corresponding backup data in the backup storage area, in step S34, data is read from the primary storage area according to the address in the read instruction.

In addition, when the received instruction is a write instruction, after a write operation is completed, in step S36, it is determined, according to a preset rule, whether data in the backup storage area needs to be updated is determined. In this embodiment, the preset rule is:
determining data of each address in the backup storage area. If the data is normal data, the data does not need to be updated; or if the data is preset first invalid data, where the first invalid data may be 0×AA, the data needs to be updated, and data of a corresponding address in the primary storage area is copied to the backup storage area, to overwrite the first invalid data, that is, to overwrite the 0×AA data.

In the foregoing description, a trigger condition of determining whether data in the backup storage area needs to be updated is a write instruction. In another option, whether data in the backup storage area needs to be updated may be determined according to a preset rule when a read instruction is received.

Specifically, when the received instruction is a read instruction, before executing the read instruction, the control unit determines, according to a preset rule, whether data in the backup storage area needs to be updated. If the data needs to be updated, the read instruction is executed to read the data from the backup storage area after the data in the backup storage area is updated; or data is read from the primary storage area before the data in the backup storage area is updated. If the data does not need to be updated, the read instruction is executed to read the data from the backup storage area after the determining.

Descriptions of determining whether update needs to be performed and an update method are similar to the description of using the write instruction as a trigger condition. Because an instruction received first after the cartridge chip is mounted to the print imaging device is generally a read instruction, and update needs to be performed after a write instruction is received, by using a read instruction as a trigger condition of update, the first received read instruction may not be considered. Alternatively, a first received write instruction is used as a trigger condition of determining update of a read instruction.

In the foregoing description of this embodiment, the control unit determines whether the data in the backup storage area needs to be updated and how to be updated according to the data stored in the backup storage area. In an optional manner, a response storage area described in Embodiment 3 may be set in the storage unit. The response storage area records how each address in the primary storage area should respond, so that data used for controlling data update such as the first invalid data 0×AA in this embodiment does not need to be stored at an address that is in the backup storage area and that corresponds to the primary storage area. In this way, the storage space in the storage unit is further saved.

The present invention further provides a consumable cartridge. The cartridge chip according to any of the foregoing embodiments is detachably mounted to the consumable cartridge.

### Variant embodiment

1. The foregoing interface unit, the control unit, and the storage unit may be integrally set on a same electronic circuit, and are manufactured by means of an application-specific integrated circuit (ASIC) process. The electronic circuit may be set on a circuit board. In addition, the foregoing units may be specifically implemented by using a microprogrammed control unit or micro control unit (MCU). Alternatively, a CPU is set in the control unit and the functions of the control unit are implemented by the CPU by executing program code. That is, the present invention provides a cartridge chip. The cartridge chip includes a processor. The processor may be the foregoing MCU or CPU. The processor may be configured to execute program code, to implement the data processing method for a cartridge chip in the foregoing embodiments.
2. Data stored in the storage unit may be divided into program data and application data according to the use of the data. The program data is executable software program code, and is generally data not accessible by a user. The program data is executed by the control unit in the cartridge chip. Specifically, the software program code may be executed by the MCU or CPU included in the cartridge chip, to control the method and the implement functions in the foregoing embodiments. That is, the present invention provides a storage medium. The storage medium stores program code. The program code may be used for implementing the data processing method for a cartridge chip in the foregoing embodiments. The application data is data accessible by a user and can be read by a print imaging device, such as the data stored at the addresses listed in the embodiments of FIG. 3 and FIG. 4. Therefore, in the foregoing embodiments, the data in the storage unit is not limited to the listed data. The program data for implementing the functions in the embodiments of the present invention may further be stored. These programs may be stored at an address not listed in the primary storage area or the backup storage area, or may be stored in another partition such as a program storage area. In this way, the storage unit may further include a program storage area.
3. To prevent information in the cartridge chip from being improperly obtained and used, the present invention may further encrypt the data in the storage unit. In one method, when a write instruction is received, data of each address is processed by the control unit in the cartridge chip according to a preset coding manner or encryption algorithm before being stored, and then is stored at (written to) a corresponding address. When the data of the address needs to be read according to a read instruction, the control unit inversely decodes or decrypts the read data, and then returns the data to a reading device or to a print imaging device through an interface unit. For example, an address 0×00 is supposed to store data 0×01. A coding algorithm adds 1 to each data, so that when writing data to the address 0×00, the control unit adds 1 to the data "0×01", to obtain "0×02", and then writes 0×02 to the address 0×00. When the read instruction instructs to read data of the address, the control unit first reads the data "0×02", and then uses an inverse decoding algorithm of subtracting 1, to obtain "0×01", and then returns 0×01 to a corresponding reading device through the interface unit. After encryption is performed, all data in the storage unit is encrypted data and belongs to an "encrypted data storage area" if divided according to areas.
4. It is described in the foregoing embodiments that, when a received instruction is a write instruction, after a write operation is completed, the control unit determines, according to a preset rule, whether information in the backup storage area needs to be updated. Further, when a determining result is that the data in the backup storage area does not need to be updated, the control unit may generate an error reply signal and send the signal to the print imaging device through the interface unit, to inform the print imaging device that the previously sent write instruction is abnormal.
5. In the foregoing embodiments, the addresses in the backup storage area immediately follow addresses in the primary storage area and are consecutive. A person skilled in the art may understand that the addresses in the backup storage area may alternatively be nonconsecutive with the addresses in the primary storage area, and the addresses in the backup storage area may alternatively be nonconsecutive. When the addressing manner is changed, the preset rule is correspondingly modified.

Finally, it should be noted that the foregoing embodiments are merely intended for describing the technical solutions of the present invention but not for limiting the present invention. Although the present invention is described in detail with reference to the foregoing embodiments, a person of ordinary skill in the art should understand that they may still make modifications to the technical solutions described in the foregoing embodiments or make equivalent replacements to some or all technical features thereof, without departing from the scope of the claims.

## Claims

1. A data processing method for a cartridge chip, wherein the cartridge chip comprises a primary storage area (310, 410, 510) and a backup storage area (320, 420, 520), and the data processing method comprises:
determining (S10, S20, S30) whether a received instruction is a read instruction or a write instruction; **characterized in that**
if the received instruction is a write instruction, writing (S11, S21, S31), according to an address comprised in the write instruction, data carried in the write instruction to a location to which the address points in the primary storage area, and determining (S15, S25, S36), according to a preset rule, whether data in the backup storage area needs to be updated.

2. The data processing method according to claim 1, wherein the method further comprises:
if the received instruction is a read instruction, determining (S12, S22, S32) whether there is backup data that is in the backup storage area and that corresponds to an address comprised in the read instruction; and
if there is backup data, reading (S13, S23) the data from the backup storage area; or
if there is no backup data, reading (S14, S24) data from the primary storage area according to the address in the read instruction.

3. The data processing method according to claim 2, wherein after it is determined that there is backup data that is in the backup storage area and that corresponds to the address comprised in the read instruction, the method further comprises:
determining (S33) a state of the backup data that is in the backup storage area and that corresponds to the address comprised in the read instruction; and
if the backup data is normal data, reading (S35) information from the backup storage area; or
if the backup data is abnormal data, reading (S34) data from the primary storage area according to the address in the read instruction.

4. The data processing method according to claim 1, wherein the method further comprises:
if the received instruction is a read instruction, determining (S33) a state of backup data that is in the backup storage area and that corresponds to an address comprised in the read instruction; and
if the backup data is normal data, reading (S35) information from the backup storage area; or
if the backup data is abnormal data, reading (S34) data from the primary storage area according to the address in the read instruction.

5. The data processing method according to claim 1, wherein the method further comprises:
if the received instruction is a read instruction, determining, according to a preset rule, whether data in the backup storage area needs to be updated; and
if the data needs to be updated, reading the data from the backup storage area after the data in the backup storage area is updated; or reading data from the primary storage area before the data in the backup storage area is updated; or
if the data does not need to be updated, reading the data from the backup storage area.

6. The data processing method according to claim 1, wherein the method further comprises:
if the received instruction is a write instruction, writing, according to an address comprised in the write instruction, data carried in the write instruction to a location to which the address points in the primary storage area, and determining a response type that corresponds to the address, to perform corresponding response processing according to the response type.

7. The data processing method according to claim 6, wherein the cartridge chip further comprises a response storage area (530), and the method further comprises:
if the received instruction is a read instruction, determining a response type that is in the response storage area and that corresponds to an address comprised in the read instruction; and
if the response type is a preset first response type, reading data from the primary storage area according to the address in the read instruction; or
if the response type is a preset second response type or a preset third response type, reading data from a corresponding address in the backup storage area, wherein
the first response type is: both a read instruction and a write instruction point to the primary storage area; the second response type is: after a write instruction is executed for the first time, data of a corresponding address in the primary storage area is copied to the backup storage area, and a read instruction points to the backup storage area; and the third response type is: a read instruction points to the backup storage area, and an error signal is replied when a write instruction is received.

8. The data processing method according to any one of claims 1 to 5, wherein the determining, according to a preset rule, whether data in the backup storage area needs to be updated comprises:
determining data of each address in the backup storage area, wherein
if the data is normal data, the data does not need to be updated; and
if the data is preset first invalid data, the data needs to be updated, and data of a corresponding address in the primary storage area is copied to the backup storage area, to overwrite the first invalid data; or
if the data is preset second invalid data, no processing is performed on the data.

9. A cartridge chip, wherein the cartridge chip comprises an interface unit (100), a storage unit (300), and a control unit (200), wherein the storage unit comprises a primary storage area (310, 410, 510) and a backup storage area (310, 420, 520);
the interface unit is configured to receive an instruction sent by a print imaging device; and
the control unit is configured to: determine (S10, S20, S30) whether the received instruction is a read instruction or a write instruction; **characterized in that**
the control unit is configured to, if the received instruction is a write instruction, write (S11, S21, S31), according to an address comprised in the write instruction, data carried in the write instruction to a location to which the address points in the primary storage area, and determine (S15, S25, S36), according to a preset rule, whether data in the backup storage area needs to be updated.

10. The cartridge chip according to claim 9, wherein the control unit is further configured to:
if the received instruction is a read instruction, determine (S12, S22, S32) whether there is backup data that is in the backup storage area and that corresponds to an address comprised in the read instruction; and
if there is backup data, read (S13, S23) the data from the backup storage area; or
if there is no backup data, read (S14, S24) data from the primary storage area according to the address in the read instruction.

11. The cartridge chip according to claim 10, wherein the control unit is further configured to:
after determining that there is backup data that is in the backup storage area and that corresponds to the address comprised in the read instruction, determine (S33) a state of the backup data that is in the backup storage area and that corresponds to the address comprised in the read instruction; and
if the backup data is normal data, read (S35) information from the backup storage area; or
if the backup data is abnormal data, read (S34) data from the primary storage area according to the address in the read instruction.

12. The cartridge chip according to claim 9, wherein the control unit is further configured to:
if the received instruction is a read instruction, determine (S33) a state of backup data that is in the backup storage area and that corresponds to an address comprised in the read instruction; and
if the backup data is normal data, read (S35) information from the backup storage area; or
if the backup data is abnormal data, read (S34) data from the primary storage area according to the address in the read instruction.

13. The cartridge chip according to claim 9, wherein the control unit is further configured to:
if the received instruction is a read instruction, determine, according to a preset rule, whether data in the backup storage area needs to be updated; and
if the data needs to be updated, read the data from the backup storage area after the data in the backup storage area is updated; or read data from the primary storage area before the data in the backup storage area is updated; or
if the data does not need to be updated, read the data from the backup storage area.

14. The cartridge chip according to claim 9, wherein the control unit is further configured to:
if the received instruction is a write instruction, write, according to an address comprised in the write instruction, data carried in the write instruction to a location to which the address points in the primary storage area, and determine a response type that corresponds to the address, to perform corresponding response processing according to the response type.

15. The cartridge chip according to claim 14, wherein the cartridge chip further comprises a response storage area (530), and the control unit is further configured to:
if the received instruction is a read instruction, determine a response type that is in the response storage area and that corresponds to an address comprised in the read instruction; and
if the response type is a preset first response type, read data from the primary storage area according to the address in the read instruction; or
if the response type is a preset second response type or a preset third response type, read data from a corresponding address in the backup storage area, wherein
the first response type is: both a read instruction and a write instruction point to the primary storage area; the second response type is: after a write instruction is executed for the first time, data of a corresponding address in the primary storage area is copied to the backup storage area, and a read instruction points to the backup storage area; the third response type is: a read instruction points to the backup storage area, and an error signal is replied when a write instruction is received.

16. The cartridge chip according to any one of claims 9 to 13, wherein the control unit is further configured to:
determine data of each address in the backup storage area, wherein
if the data is normal data, the data does not need to be updated; and
if the data is preset first invalid data, the data needs to be updated, and data of a corresponding address in the primary storage area is copied to the backup storage area, to overwrite the first invalid data; or
if the data is preset second invalid data, no processing is performed on the data.

17. The cartridge chip according to claim 16, wherein the addresses in the backup storage area are in a one-to-one correspondence with addresses in the primary storage area.

18. The cartridge chip according to claim 16, wherein the addresses in the backup storage area do not correspond to the addresses in the primary storage area.

19. The cartridge chip according to claim 16, wherein the addresses in the backup storage area and the addresses in the primary storage area are consecutive.

20. The cartridge chip according to claim 16, wherein the addresses in the backup storage area and the addresses in the primary storage area are nonconsecutive.

21. The cartridge chip according to claim 15, wherein addresses in the response storage area are in a one-to-one correspondence with addresses in the primary storage area.

22. A cartridge chip, wherein the cartridge chip comprises a processor, and the processor is configured to execute program code, to implement the data processing method for a cartridge chip according to any one of claims 1 to 8.

23. A storage medium, wherein the storage medium stores program code to cause the cartridge chip of claim 9 to execute the data processing method for a cartridge chip according to any one of claims 1 to 8.

## Patentansprüche

1. Datenverarbeitungsverfahren für einen Kartuschen-Chip, wobei der Kartuschen-Chip einen Hauptspeicherbereich (310, 410, 510) und einen Sicherungsspeicherbereich (320, 420, 520) aufweist und das Datenverarbeitungsverfahren umfasst:
Bestimmen (S10, S20, S30), ob ein empfangener Befehl ein Lesebefehl oder ein Schreibbefehl ist; **gekennzeichnet durch**,
wenn der empfangene Befehl ein Schreibbefehl ist, Schreiben (S11, S21, S31) von Daten, die in dem Schreibbefehl übermittelt werden, an eine Stelle in dem Hauptspeicherbereich, auf welche die Adresse zeigt, gemäß einer Adresse, die in dem Schreibbefehl enthalten ist, und Bestimmen (S15, S25, S36) gemäß einer vorher festgelegten Regel, ob Daten in dem Sicherungsspeicherbereich aktualisiert werden müssen.

2. Datenverarbeitungsverfahren nach Anspruch 1, wobei das Verfahren ferner umfasst:
wenn der empfangene Befehl ein Lesebefehl ist, Bestimmen (S12, S22, S32), ob es Sicherungsdaten gibt, welche sich in dem Sicherungsspeicherbereich befinden und welche einer Adresse entsprechen, die in dem Lesebefehl enthalten ist; und
wenn es Sicherungsdaten gibt, Auslesen (S13, S23) der Daten aus dem Sicherungsspeicherbereich; oder
wenn es keine Sicherungsdaten gibt, Auslesen (S14, S24) von Daten aus dem Hauptspeicherbereich gemäß der Adresse in dem Lesebefehl.

3. Datenverarbeitungsverfahren nach Anspruch 2, wobei, nachdem bestimmt ist, dass es Sicherungsdaten gibt, welche sich in dem Sicherungsspeicherbereich befinden und welche der Adresse entsprechen, die in dem Lesebefehl enthalten ist, das Verfahren ferner umfasst:
Bestimmen (S33) eines Zustands der Sicherungsdaten, welche sich in dem Sicherungsspeicherbereich befinden und welche der Adresse entsprechen, die in dem Lesebefehl enthalten ist; und
wenn die Sicherungsdaten normale Daten sind, Auslesen (S35) der Informationen aus dem Sicherungsspeicherbereich; oder
wenn die Sicherungsdaten anomale Daten sind, Auslesen (S34) der Daten aus dem Hauptspeicherbereich gemäß der Adresse in dem Lesebefehl.

4. Datenverarbeitungsverfahren nach Anspruch 1, wobei das Verfahren ferner umfasst:
wenn der empfangene Befehl ein Lesebefehl ist, Bestimmen (S33) eines Zustands von Sicherungsdaten, welche sich in dem Sicherungsspeicherbereich befinden und welche einer Adresse entsprechen, die in dem Lesebefehl enthalten ist; und
wenn die Sicherungsdaten normale Daten sind, Auslesen (S35) der Informationen aus dem Sicherungsspeicherbereich; oder
wenn die Sicherungsdaten anomale Daten sind, Auslesen (S34) der Daten aus dem Hauptspeicherbereich gemäß der Adresse in dem Lesebefehl.

5. Datenverarbeitungsverfahren nach Anspruch 1, wobei das Verfahren ferner umfasst:
wenn der empfangene Befehl ein Lesebefehl ist, Bestimmen gemäß einer vorher festgelegten Regel, ob Daten in dem Sicherungsspeicherbereich aktualisiert werden müssen; und
wenn die Daten aktualisiert werden müssen, Auslesen der Daten aus dem Sicherungsspeicherbereich, nachdem die Daten in dem Sicherungsspeicherbereich aktualisiert sind; oder Auslesen von Daten aus dem Hauptspeicherbereich, bevor die Daten in dem Sicherungsspeicherbereich aktualisiert sind; oder
wenn die Daten nicht aktualisiert werden müssen, Auslesen der Daten aus dem Sicherungsspeicherbereich.

6. Datenverarbeitungsverfahren nach Anspruch 1, wobei das Verfahren ferner umfasst:
wenn der empfangene Befehl ein Schreibbefehl ist, Schreiben von Daten, die in dem Schreibbefehl übermittelt werden, an eine Stelle in dem Hauptspeicherbereich, auf welche die Adresse zeigt gemäß einer Adresse, die in dem Schreibbefehl enthalten ist, und Bestimmen eines Reaktionstyps, welcher der Adresse entspricht, um eine entsprechende Reaktionsverarbeitung gemäß dem Reaktionstyp durchzuführen.

7. Datenverarbeitungsverfahren nach Anspruch 6, wobei der Kartuschen-Chip ferner einen Reaktionsspeicherbereich (530) aufweist und das Verfahren ferner umfasst:
wenn der empfangene Befehl ein Lesebefehl ist, Bestimmen eines Reaktionstyps, welcher sich in dem Reaktionsspeicherbereich befindet und welcher einer Adresse entspricht, die in dem Lesebefehl enthalten ist; und
wenn der Reaktionstyp ein vorher festgelegter erster Reaktionstyp ist, Auslesen von Daten aus dem Hauptspeicherbereich gemäß der Adresse in dem Lesebefehl; oder
wenn der Reaktionstyp ein vorher festgelegter zweiter Reaktionstyp ein vorher festgelegter dritter Reaktionstyp ist, Auslesen von Daten aus einer entsprechenden Adresse in dem Sicherungsspeicherbereich, wobei
es sich bei dem ersten Reaktionstyp um Folgendes handelt: sowohl ein Lesebefehl als auch ein Schreibbefehl zeigen auf den Hauptspeicherbereich; es sich bei dem zweiten Reaktionstyp um Folgendes handelt: nachdem ein Schreibbefehl zum ersten Mal ausgeführt ist, werden Daten der entsprechenden Adresse in dem Hauptspeicherbereich in den Sicherungsspeicherbereich kopiert und ein Lesebefehl zeigt auf den Sicherungsspeicherbereich; und es sich bei dem dritten Reaktionstyp um Folgendes handelt: ein Lesebefehl zeigt auf den Sicherungsspeicherbereich und es wird mit einem Fehlersignal wird geantwortet, wenn ein Schreibbefehl empfangen wird.

8. Datenverarbeitungsverfahren nach einem der Ansprüche 1 bis 5, wobei das Bestimmen gemäß einer vorher festgelegten Regel, ob Daten in dem Sicherungsspeicherbereich aktualisiert werden müssen, umfasst:
Bestimmen von Daten jeder Adresse in dem Sicherungsspeicherbereich, wobei,
wenn die Daten normale Daten sind, die Daten nicht aktualisiert werden müssen; und
wenn die Daten vorher festgelegte erste ungültige Daten sind, die Daten aktualisiert werden müssen und Daten einer entsprechenden Adresse in dem Hauptspeicherbereich in den Sicherungsspeicherbereich kopiert werden, um die ersten ungültigen Daten zu überschreiben; oder
wenn die Daten vorher festgelegte zweite ungültige Daten sind, an den Daten keine Verarbeitung durchgeführt wird.

9. Kartuschen-Chip, wobei der Kartuschen-Chip eine Schnittstelleneinheit (100), eine Speichereinheit (300) und eine Steuereinheit (200) aufweist, wobei die Speichereinheit einen Hauptspeicherbereich (310, 410, 510) und einen Sicherungsspeicherbereich (310, 420, 520) aufweist;
die Schnittstelleneinheit dafür konfiguriert ist, einen Befehl zu empfangen, der von einer Druckervorrichtung gesendet wird; und
die Steuereinheit für Folgendes konfiguriert ist: Bestimmen (S10, S20, S30), ob der empfangene Befehl ein Lesebefehl oder ein Schreibbefehl ist; **dadurch gekennzeichnet, dass**
die Steuereinheit dafür konfiguriert ist, wenn der empfangene Befehl ein Schreibbefehl ist, Daten, die in dem Schreibbefehl übermittelt werden, gemäß einer Adresse, die in dem Schreibbefehl enthalten ist, an eine Stelle in dem Hauptspeicherbereich zu schreiben (S11, S21, S31), auf welche die Adresse zeigt, und gemäß einer vorher festgelegten Regel zu bestimmen (S15, S25, S36), ob Daten in dem Sicherungsspeicherbereich aktualisiert werden müssen.

10. Kartuschen-Chip nach Anspruch 9, wobei die Steuereinheit ferner für Folgendes konfiguriert ist:
wenn der empfangene Befehl ein Lesebefehl ist, Bestimmen (S12, S22, S32), ob es Sicherungsdaten gibt, welche sich in dem Sicherungsdatenbereich befinden und welche einer Adresse entsprechen, die in dem Lesebefehl enthalten ist; und
wenn es Sicherungsdaten gibt, Auslesen (S13, S23) der Daten aus dem Sicherungsspeicherbereich; oder
wenn es keine Sicherungsdaten gibt, Auslesen (S14, S24) von Daten aus dem Hauptspeicherbereich gemäß der Adresse in dem Lesebefehl.

11. Kartuschen-Chip nach Anspruch 10, wobei die Steuereinheit ferner für Folgendes konfiguriert ist:
nach dem Bestimmen, dass es Sicherungsdaten gibt, welche sich in dem Sicherungsdatenbereich befinden und welche der Adresse entsprechen, die in dem Lesebefehl enthalten ist, Bestimmen (S33) eines Zustands der Sicherungsdaten, welche sich in dem Sicherungsdatenbereich befinden und welche der Adresse entsprechen, die in dem Lesebefehl enthalten ist; und
wenn die Sicherungsdaten normale Daten sind, Auslesen (S35) von Informationen aus dem Sicherungsspeicherbereich; oder
wenn die Sicherungsdaten anomale Daten sind, Auslesen (S34) von Daten aus dem Hauptspeicherbereich gemäß der Adresse in dem Lesebefehl.

12. Kartuschen-Chip nach Anspruch 9, wobei die Steuereinheit ferner für Folgendes konfiguriert ist:
wenn der empfangene Befehl ein Lesebefehl ist, Bestimmen (S33) eines Zustands von Sicherungsdaten, welche sich in dem Sicherungsspeicherbereich befinden und welche einer Adresse entsprechen, die in dem Lesebefehl enthalten ist; und
wenn die Sicherungsdaten normale Daten sind, Auslesen (S35) der Informationen aus dem Sicherungsspeicherbereich; oder
wenn die Sicherungsdaten anomale Daten sind, Auslesen (S34) der Daten aus dem Hauptspeicherbereich gemäß der Adresse in dem Lesebefehl.

13. Kartuschen-Chip nach Anspruch 9, wobei die Steuereinheit ferner für Folgendes konfiguriert ist:
wenn der empfangene Befehl ein Lesebefehl ist, Bestimmen gemäß einer vorher festgelegten Regel, ob Daten in dem Sicherungsspeicherbereich aktualisiert werden müssen; und
wenn die Daten aktualisiert werden müssen, Auslesen der Daten aus dem Sicherungsspeicherbereich, nachdem die Daten in dem Sicherungsspeicherbereich aktualisiert sind; oder Auslesen von Daten aus dem Hauptspeicherbereich, bevor die Daten in dem Sicherungsspeicherbereich aktualisiert sind; oder
wenn die Daten nicht aktualisiert werden müssen, Auslesen der Daten aus dem Sicherungsspeicherbereich.

14. Kartuschen-Chip nach Anspruch 9, wobei die Steuereinheit ferner für Folgendes konfiguriert ist:
wenn der empfangene Befehl ein Schreibbefehl ist, Schreiben von Daten, die in dem Schreibbefehl übermittelt werden, an eine Stelle in dem Hauptspeicherbereich, auf welche die Adresse zeigt gemäß einer Adresse, die in dem Schreibbefehl enthalten ist, und Bestimmen eines Reaktionstyps, welcher der Adresse entspricht, um eine entsprechende Reaktionsverarbeitung gemäß dem Reaktionstyp durchzuführen.

15. Kartuschen-Chip nach Anspruch 14, wobei der Kartuschen-Chip ferner einen Reaktionsspeicherbereich (530) aufweist und die Steuereinheit ferner für Folgendes konfiguriert ist:
wenn der empfangene Befehl ein Lesebefehl ist, Bestimmen eines Reaktionstyps, welcher sich in dem Reaktionsspeicherbereich befindet und welcher einer Adresse entspricht, die in dem Lesebefehl enthalten ist; und
wenn der Reaktionstyp ein vorher festgelegter erster Reaktionstyp ist, Auslesen von Daten aus dem Hauptspeicherbereich gemäß der Adresse in dem Lesebefehl; oder
wenn der Reaktionstyp ein vorher festgelegter zweiter Reaktionstyp ein vorher festgelegter dritter Reaktionstyp ist, Auslesen von Daten aus einer entsprechenden Adresse in dem Sicherungsspeicherbereich, wobei
es sich bei dem ersten Reaktionstyp um Folgendes handelt: sowohl ein Lesebefehl als auch ein Schreibbefehl zeigen auf den Hauptspeicherbereich; es sich bei dem zweiten Reaktionstyp um Folgendes handelt: nachdem ein Schreibbefehl zum ersten Mal ausgeführt ist, werden Daten der entsprechenden Adresse in dem Hauptspeicherbereich in den Sicherungsspeicherbereich kopiert und ein Lesebefehl zeigt auf den Sicherungsspeicherbereich; und es sich bei dem dritten Reaktionstyp um Folgendes handelt: ein Lesebefehl zeigt auf den Sicherungsspeicherbereich und es wird mit einem Fehlersignal geantwortet, wenn ein Schreibbefehl empfangen wird.

16. Kartuschen-Chip nach einem der Ansprüche 9 bis 13, wobei die Steuereinheit ferner für Folgendes konfiguriert ist:
Bestimmen von Daten jeder Adresse in dem Sicherungsspeicherbereich, wobei,
wenn die Daten normale Daten sind, die Daten nicht aktualisiert werden müssen; und
wenn die Daten vorher festgelegte erste ungültige Daten sind, die Daten aktualisiert werden müssen und Daten einer entsprechenden Adresse in dem Hauptspeicherbereich in den Sicherungsspeicherbereich kopiert werden, um die ersten ungültigen Daten zu überschreiben; oder
wenn die Daten vorher festgelegte zweite ungültige Daten sind, an den Daten keine Verarbeitung durchgeführt wird.

17. Kartuschen-Chip nach Anspruch 16, wobei die Adressen in dem Sicherungsspeicherbereich eins zu eins Adressen in dem Hauptspeicherbereich entsprechen.

18. Kartuschen-Chip nach Anspruch 16, wobei die Adressen in dem Sicherungsspeicherbereich den Adressen in dem Hauptspeicherbereich nicht entsprechen.

19. Kartuschen-Chip nach Anspruch 16, wobei die Adressen in dem Sicherungsspeicherbereich und die Adressen in dem Hauptspeicherbereich aufeinander folgen.

20. Kartuschen-Chip nach Anspruch 16, wobei die Adressen in dem Sicherungsspeicherbereich und die Adressen in dem Hauptspeicherbereich nicht aufeinander folgen.

21. Kartuschen-Chip nach Anspruch 15, wobei Adressen in dem Reaktionsspeicherbereich eins zu eins Adressen in dem Hauptspeicherbereich entsprechen.

22. Kartuschen-Chip, wobei der Kartuschen-Chip einen Prozessor aufweist und der Prozessor dafür konfiguriert ist, Programmcode auszuführen, um das Datenverarbeitungsverfahren für einen Kartuschen-Chip nach einem der Ansprüche 1 bis 8 zu realisieren.

23. Speichermedium, wobei das Speichermedium Programmcode zum Bewirken speichert, das der Kartuschen-Chip nach Anspruch 9 das Datenverarbeitungsverfahren für einen Kartuschen-Chip nach einem der Ansprüche 1 bis 8 ausführt.

## Revendications

1. Procédé de traitement de données pour une puce de cartouche, dans lequel la puce de cartouche comprend une zone de mémorisation principale (310, 410, 510) et une zone de mémorisation de sauvegarde (320, 420, 520), et le procédé de traitement de données comprend de :
déterminer (S10, S20, S30) si une instruction reçue est une instruction de lecture ou
une instruction d'écriture ; **caractérisé en ce que**
si l'instruction reçue est une instruction d'écriture, écrire (S11, S21, S31), selon une adresse comprise dans l'instruction d'écriture, des données portées dans l'instruction d'écriture vers un emplacement vers lequel pointe l'adresse dans la zone de mémorisation primaire, et déterminer (S15, S25, S36), selon une règle prédéfinie, si des données dans la zone de mémorisation de sauvegarde doivent être mises à jour

2. Procédé de traitement de données selon la revendication 1, dans lequel le procédé comprend en outre de :
si l'instruction reçue est une instruction de lecture, déterminer (S12, S22, S32) s'il existe des données de sauvegarde qui sont dans la zone de mémorisation de sauvegarde et qui correspondent à une adresse comprise dans l'instruction de lecture ; et
s'il existe des données de sauvegarde, lire (S13, S23) les données à partir de la zone de mémorisation de sauvegarde ; ou
s'il n'y a pas de données de sauvegarde, lire (S14, S24) les données de la zone de mémorisation primaire selon l'adresse dans l'instruction de lecture.

3. Procédé de traitement de données selon la revendication 2, dans lequel après qu'il est déterminé qu'il existe des données de sauvegarde qui sont dans la zone de mémorisation de sauvegarde et qui correspondent à l'adresse comprise dans l'instruction de lecture, le procédé comprend en outre de :
déterminer (S33) un état des données de sauvegarde qui se trouvent dans la zone de mémorisation de sauvegarde et qui correspond à l'adresse comprise dans l'instruction de lecture ; et
si les données de sauvegarde sont des données normales, lire (S35) des informations à partir de la zone de mémorisation de sauvegarde ; ou
si les données de sauvegarde sont des données anormales, lire (S34) les données de la zone de mémorisation primaire selon l'adresse dans l'instruction de lecture.

4. Procédé de traitement de données selon la revendication 1, dans lequel le procédé comprend en outre de :
si l'instruction reçue est une instruction de lecture, déterminer (S33) un état de données de sauvegarde qui se trouve dans la zone de mémorisation de sauvegarde et qui correspond à une adresse comprise dans l'instructions de lecture ; et
si les données de sauvegarde sont des données normales, lire (S35) des informations à partir de la zone de mémorisation de sauvegarde ; ou
si les données de sauvegarde sont des données anormales, lire (S34) les données à partir de la zone de mémorisation primaire selon l'adresse dans l'instruction de lecture.

5. Procédé de traitement de données selon la revendication 1, dans lequel le procédé comprend en outre :
si l'instruction reçue est une instruction de lecture, déterminer, selon une règle prédéfinie, si des données dans la zone de mémorisation de sauvegarde doivent être mises à jour ; et
si les données doivent être mises à jour, lire les données à partir de la zone de mémorisation de sauvegarde après que les données dans la zone de mémorisation de sauvegarde ont été mises à jour ; ou
lire les données de la zone de mémorisation primaire avant que les données dans la zone de mémorisation de sauvegarde ne soient mises à jour ; ou
si les données n'ont pas besoin d'être mises à jour, lire les données de la zone de mémorisation de sauvegarde.

6. Procédé de traitement de données selon la revendication 1, dans lequel le procédé comprend en outre de :
si l'instruction reçue est une instruction d'écriture, écrire, selon une adresse comprise dans l'instruction d'écriture, des données portées dans l'instruction d'écriture à un emplacement vers lequel pointe l'adresse dans la zone de mémorisation primaire, et déterminer un type de réponse qui correspond à l'adresse, pour effectuer le traitement de réponse correspondant en fonction du type de réponse.

7. Procédé de traitement de données selon la revendication 6, dans lequel la puce de cartouche comprend en outre une zone de mémorisation de réponse (530), et le procédé comprend en outre de :
si l'instruction reçue est une instruction de lecture, déterminer un type de réponse qui se trouve dans la zone de mémorisation de réponses et qui correspond à une adresse comprise dans l'instruction de lecture ; et
si le type de réponse est un premier type de réponse prédéfini, lire des données à partir de la zone de mémorisation primaire selon l'adresse dans l'instruction de lecture ; ou
si le type de réponse est un deuxième type de réponse prédéfini ou un troisième type de réponse prédéfini,
lire des données à partir d'une adresse correspondante dans la zone de mémorisation de sauvegarde, dans lequel
le premier type de réponse est : à la fois une instruction de lecture et une instruction d'écriture pointent vers la zone de mémorisation primaire ; le deuxième type de réponse est : après qu'une instruction d'écriture a été exécutée pour la première fois,
les données d'une adresse correspondante dans la zone de mémorisation primaire sont copiées dans la zone de mémorisation de sauvegarde, et une instruction de lecture pointe vers la zone de mémorisation de sauvegarde ; et le troisième type de réponse est : une instruction de lecture pointe vers la zone de mémorisation de sauvegarde, et un signal d'erreur est répondu lorsqu'une instruction d'écriture est reçue.

8. Procédé de traitement de données selon une quelconque des revendications 1 à 5, dans lequel la détermination, selon une règle prédéfinie, si des données dans la zone de mémorisation de sauvegarde doivent être mises à jour comprend de :
déterminer les données de chaque adresse dans la zone de mémorisation de sauvegarde, dans lequel
si les données sont des données normales, les données n'ont pas besoin d'être mises à jour ; et
si les données sont des premières données invalides prédéfinies, les données doivent être mises à jour, et les données d'une adresse correspondante dans la zone de mémorisation primaire sont copiées dans la zone de mémorisation de sauvegarde, pour écraser les premières données invalides ; ou
si les données sont des deuxièmes données invalides prédéfinies, aucun traitement n'est effectué sur les données.

9. Puce de cartouche, dans laquelle la puce de cartouche comprend une unité d'interface (100), une unité de mémorisation (300) et une unité de commande (200), dans laquelle l'unité de mémorisation comprend une zone de mémorisation primaire (310, 410, 510) et une zone de mémorisation de sauvegarde (310, 420, 520) ;
l'unité d'interface est configurée pour recevoir une instruction envoyée par un dispositif d'imagerie d'impression ; et
l'unité de commande est configurée pour : déterminer (S10, S20, S30) si l'instruction reçue est une instruction de lecture ou une instruction d'écriture ; **caractérisé en ce que**
l'unité de commande est configurée pour, si l'instruction reçue est une instruction d'écriture, écrire (S11, S21, S31), selon une adresse comprise dans l'instruction d'écriture, des données transportées dans l'instruction d'écriture vers un emplacement vers lequel l'adresse pointe dans la zone de mémorisation primaire, et déterminer (S15, S25, S36), selon une règle prédéfinie, si les données dans la zone de mémorisation de sauvegarde doivent être mises à jour.

10. Puce de cartouche selon la revendication 9, dans laquelle l'unité de commande est en outre configurée pour :
si l'instruction reçue est une instruction de lecture, déterminer (S12, S22, S32) s'il existe des données de sauvegarde qui se trouvent dans la zone de mémorisation de sauvegarde et qui correspondent à une adresse comprise dans l'instruction de lecture ; et
s'il y a des données de sauvegarde, lire (S13, S23) les données à partir de la zone de mémorisation de sauvegarde ; ou
s'il n'y a pas de données de sauvegarde, lire (S14, S24) les données de la zone de mémorisation primaire selon l'adresse dans l'instruction de lecture.

11. Puce de cartouche selon la revendication 10, dans laquelle l'unité de commande est en outre configurée pour :
après avoir déterminé qu'il existe des données de sauvegarde qui se trouvent dans la zone de mémorisation de sauvegarde et qui correspondent à l'adresse comprise dans l'instruction de lecture, déterminer (S33) un état des données de sauvegarde qui se trouvent dans la zone de mémorisation de sauvegarde et qui correspond à l'adresse comprise dans l'instruction de lecture ; et
si les données de sauvegarde sont des données normales, lire (S35) les informations de la zone de mémorisation de sauvegarde ; ou
si les données de sauvegarde sont des données anormales, lire (S34) les données de la zone de mémorisation primaire selon l'adresse dans l'instruction de lecture.

12. Puce de cartouche selon la revendication 9, dans laquelle l'unité de commande est en outre configurée pour :
si l'instruction reçue est une instruction de lecture, déterminer (S33) un état de données de sauvegarde qui se trouve dans la zone de mémorisation de sauvegarde et qui correspond à une adresse comprise dans l'instruction de lecture ; et
si les données de sauvegarde sont des données normales, lire (S35) les informations de la zone de mémorisation de sauvegarde ; ou
si les données de sauvegarde sont des données anormales, lire (S34) les données de la zone de mémorisation primaire selon l'adresse dans l'instruction de lecture.

13. Puce de cartouche selon la revendication 9, dans laquelle l'unité de commande est en outre configurée pour :
si l'instruction reçue est une instruction de lecture, déterminer, selon une règle prédéfinie, si des données dans la zone de mémorisation de sauvegarde doivent être mises à jour ; et
si les données doivent être mises à jour, lire les données de la zone de mémorisation de sauvegarde après la mise à jour des données dans la zone de mémorisation de sauvegarde ; ou
lire les données de la zone de mémorisation primaire avant que les données dans la zone de mémorisation de sauvegarde ne soient mises à jour ; ou
si les données n'ont pas besoin d'être mises à jour, lire les données de la zone de mémorisation de sauvegarde.

14. Puce de cartouche selon la revendication 9, dans laquelle l'unité de commande est en outre configurée pour :
si l'instruction reçue est une instruction d'écriture, écrire, selon une adresse comprise dans l'instruction d'écriture, des données portées dans l'instruction d'écriture vers un emplacement vers lequel pointe l'adresse dans la zone de mémorisation primaire, et déterminer un type de réponse qui correspond à l'adresse, pour effectuer le traitement de réponse correspondant en fonction du type de réponse.

15. Puce de cartouche selon la revendication 14, dans laquelle la puce de cartouche comprend en outre une zone de mémorisation de réponse (530), et l'unité de commande est en outre configurée pour :
si l'instruction reçue est une instruction de lecture, déterminer un type de réponse qui se trouve dans la zone de mémorisation de réponse et qui correspond à une adresse comprise dans l'instruction de lecture ; et
si le type de réponse est un premier type de réponse prédéfini, lire les données de la zone de mémorisation primaire selon l'adresse dans l'instruction de lecture ; ou
si le type de réponse est un deuxième type de réponse prédéfini ou un troisième type de réponse prédéfini, lire des données à partir d'une adresse correspondante dans la zone de mémorisation de sauvegarde, dans lequel
le premier type de réponse est : à la fois une instruction de lecture et une instruction d'écriture pointent vers la zone de mémorisation primaire ; le deuxième type de réponse est : après qu'une instruction d'écriture a été exécutée pour la première fois, les données d'une adresse correspondante dans la zone de mémorisation primaire sont copiées dans la zone de mémorisation de sauvegarde, et une instruction de lecture pointe vers la zone de mémorisation de sauvegarde ; le troisième type de réponse est : une instruction de lecture pointe vers la zone de mémorisation de sauvegarde, et un signal d'erreur est répondu lorsqu'une instruction d'écriture est reçue.

16. Puce de cartouche selon une quelconque des revendications 9 à 13, dans laquelle l'unité de commande est en outre configurée pour :
déterminer les données de chaque adresse dans la zone de mémorisation de sauvegarde, dans lequel si les données sont des données normales, les données n'ont pas besoin d'être mises à jour ; et
si les données sont des premières données invalides prédéfinies, les données doivent être mises à jour, et les données d'une adresse correspondante dans la zone de mémorisation primaire sont copiées dans la zone de mémorisation de sauvegarde, pour écraser les premières données invalides ; ou
si les données sont des deuxièmes données invalides prédéfinies, aucun traitement n'est effectué sur les données.

17. Puce de cartouche selon la revendication 16, dans laquelle les adresses dans la zone de mémorisation de sauvegarde sont en correspondance une à une avec des adresses dans la zone de mémorisation primaire.

18. Puce de cartouche selon la revendication 16, dans laquelle les adresses dans la zone de mémorisation de sauvegarde ne correspondent pas aux adresses dans la zone de mémorisation primaire.

19. Puce de cartouche selon la revendication 16, dans laquelle les adresses dans la zone de mémorisation de sauvegarde et les adresses dans la zone de mémorisation primaire sont consécutives.

20. Puce de cartouche selon la revendication 16, dans laquelle les adresses dans la zone de mémorisation de sauvegarde et les adresses dans la zone de mémorisation primaire sont non consécutives.

21. Puce de cartouche selon la revendication 15, dans laquelle les adresses dans la zone de mémorisation de réponse sont en correspondance une à une avec les adresses dans la zone de mémorisation primaire.

22. Puce de cartouche, dans laquelle la puce de cartouche comprend un processeur, et le processeur est configuré pour exécuter un code de programme, pour mettre en œuvre le procédé de traitement de données pour une puce de cartouche selon une quelconque des revendications 1 à 8.

23. Support de mémorisation, dans lequel le support de mémorisation mémorise un code de programme pour amener la puce de cartouche selon la revendication 9 à exécuter le procédé de traitement de données pour une puce de cartouche selon une quelconque des revendications 1 à 8.
